# EUROPÄISCHE PATENTSCHRIFT

(11) **EP 4 057 475 B1**
(45) Veröffentlichungstag und Bekanntmachung des Hinweises auf die Patenterteilung: **17.12.2025**
(21) Anmeldenummer: 22156140.0
(22) Anmeldetag: 10.02.2022
(51) Int. Cl.: H02J 7/00

(54) **ENERGIEVERSORGUNG EINES ELEKTROGERÄTS MITTELS EINES AKKUPACKS UND LADEN EINES AKKUPACKS ANHAND EINES ADAPTERS**
POWER SUPPLY OF AN ELECTRICAL APPLIANCE BY MEANS OF A RECHARGEABLE BATTERY PACK AND CHARGING OF A BATTERY PACK USING AN ADAPTER
ALIMENTATION ÉLECTRIQUE D'UN APPAREIL ÉLECTRIQUE AU MOYEN D'UN BLOC D'ACCUMULATEUR ET?CHARGE D'UN BLOC D'ACCUMULATEUR À L'AIDE D'UN ADAPTATEUR

(30) Priorität: 01.03.2021 DE 102021104825
(43) Veröffentlichungstag der Anmeldung: 14.09.2022
(73) Patentinhaber: Einhell Germany AG, 94405 Landau / Isar (DE)
(72) Erfinder: Dr. THANNHUBER, Markus, 94405 Landau (DE)
(74) Vertreter: Hofstetter, Schurack & Partner

(56) Entgegenhaltungen:
- DE-U1- 202011 110 568
- US-A1- 2002 125 857
- US-A1- 2012 189 892

## Beschreibung

Die vorliegende Erfindung betrifft einen Adapter zur Verbindung eines Akkupacks mit einem Elektrogerät, eine Akkupackanordnung mit einem solchen Adapter, eine Elektrogeräteanordnung mit einem solchen Adapter, ein Verfahren zur elektrischen Energieversorgung eines Elektrogeräts sowie ein Verfahren zum Laden eines Akkupacks.

Elektrogeräte, wie beispielsweise Elektrowerkzeuge, elektrische Haushaltsgeräte oder Elektrofahrzeuge, können mitunter mit abnehmbaren Akkupacks mit elektrischer Energie versorgt werden. Dabei wäre es aus Sicht des Benutzerkomforts ebenso wie aus ökologischen Aspekten vorteilhaft, wenn verschiedene Geräte mit demselben Akkupack betrieben werden könnten. Entsprechendes gilt auch für Ladegeräte zum Laden des Akkupacks. Hier wäre es wünschenswert, dass ein Ladegerät für unterschiedliche Akkupacks verwendet werden könnte beziehungsweise ein Akkupack mit verschiedenen Ladegeräten geladen werden könnte.

Schnittstellen und Anschlüsse von Elektrogeräten, Ladegeräten und Akkupacks eines einzigen Herstellers sind häufig derart ausgestaltet, dass eine umfassende Kompatibilität gegeben ist. Bei Geräten beziehungsweise Akkupacks oder Ladegeräten verschiedener Hersteller ist dies jedoch nicht der Fall.

Adapter, die eine mechanische und elektrische Verbindung zwischen einem Elektrowerkzeug und einem Akkupack herstellen, sind bekannt. Beispielsweise wird im Dokument US 2012/0189892 A1 ein Adapter beschrieben, durch den die Verwendung eines aufschiebbaren Akkupacks mit einem Elektrowerkzeug ermöglicht wird, für das originär die Energieversorgung über eine sogenannte Dornbatterie im Handgriff des Elektrowerkzeugs vorgesehen ist.

Dokument US 2002/0125857 A1 beschreibt einen Adapter zur elektrischen Verbindung eines Akkupacks mit einem elektrischen Gerät, wie etwa einem schnurlosen Elektrowerkzeug oder einem Ladegerät. Der Adapter umfasst einen ersten Teil und einen zweiten Teil. Der erste Teil ermöglicht eine lösbare Befestigung an dem elektrischen Gerät. Der zweite Teil nimmt zumindest einen Teil des Akkupacks physisch auf. In diesem Zusammenhang sei weiterhin auf Dokument DE202011110568U1 verwiesen.

Verschiedene Modelle oder Fabrikate von Elektrogeräten weisen im Allgemeinen jedoch nicht nur unterschiedliche mechanische Ausgestaltungen ihrer Akkupacks und entsprechender Schnittstellen auf. Vielmehr sind auch Steuerungs- und Regelungssysteme, wie beispielsweise Batteriemanagementsysteme, Gerätemanagementsysteme und Ladegerätemanagementsysteme, bei verschiedenen Modellen und Fabrikaten gegebenenfalls unterschiedlich verteilt. Beispielsweise könnte in einem ersten Elektrogerät ein Batteriemanagementsystem für das zugehörige Akkupack vorgesehen sein, sodass das Akkupack selbst über ein entsprechendes Batteriemanagementsystem nicht verfügt. Bei einem zweiten Elektrogerät könnte es gerade umgekehrt sein, sodass also das zweite Elektrogerät nicht über ein Batteriemanagementsystem verfügt. Eine Kombination des zweiten Elektrogeräts mit einem Akkupack für das erste Elektrogerät über einen einfachen Adapter ist daher nicht ohne weiteres möglich. Dieses Beispiel ist als rein exemplarisch anzusehen. Es bestehen vielfältige mögliche Varianten hinsichtlich der Verteilung des Batteriemanagementsystems, des Gerätemanagementsystems und des Ladegerätmanagementsystems.

Es ist daher eine Aufgabe der vorliegenden Erfindung, ein verbessertes Konzept für einen Adapter zur Verbindung eines Akkupacks mit einem Elektrogerät anzugeben, durch welches die Kompatibilität zwischen Akkupack und Elektrogerät für vielfältigere Ausgangssituationen erreichbar ist.

Diese Aufgabe wird vorliegend gelöst durch den jeweiligen Gegenstand der unabhängigen Ansprüche. Vorteilhafte Weiterbildungen und bevorzugte Ausführungsformen sind Gegenstand der abhängigen Ansprüche.

Das verbesserte Konzept beruht auf der Idee, in einem Adapter zur Verbindung eines Akkupacks mit einem Elektrogerät eine Steuereinrichtung vorzusehen, die einen Betriebszustand des Akkupacks und/oder des Elektrogeräts überwachen und abhängig von der Überwachung eine Maßnahme einleiten kann.

Unter einem Elektrogerät kann hier und im Folgenden sowohl ein elektrischer Verbraucher, also beispielsweise ein Elektrowerkzeug, ein elektrisches Haushaltsgerät oder ein elektrisch antreibbares Fahrzeug, insbesondere ein Kleinfahrzeug wie etwa ein Tretroller oder ein elektrisch antreibbares Fahrrad, als auch ein Ladegerät zum Laden des Akkupacks verstanden werden.

Gemäß dem verbesserten Konzept wird ein Adapter zur Verbindung eines Akkupacks mit einem Elektrogerät zum Übertragen eines elektrischen Entladestroms von dem Akkupack über den Adapter zu dem Elektrogerät und/oder zum Übertragen eines elektrischen Ladestroms von dem Elektrogerät über den Adapter zu dem Akkupack angegeben. Insbesondere ist der Adapter dazu eingerichtet, den elektrischen Entladestrom zu übertragen, wenn das Elektrogerät als elektrischer Verbraucher ausgestaltet ist und/oder zum Übertragen des elektrischen Ladestroms, wenn das Elektrogerät als Ladegerät ausgestaltet ist. Das Elektrogerät und das Akkupack sind hinsichtlich einer mechanischen und/oder elektrischen Verbindung und/oder hinsichtlich einer Funktionalität inkompatibel. Der Adapter weist eine Geräteschnittstelle zur mechanischen und elektrischen Verbindung des Adapters mit dem Elektrogerät auf sowie eine Akkuschnittstelle zur mechanischen und elektrischen Verbindung des Adapters mit dem Akkupack. Der Adapter weist außerdem eine Steuereinrichtung auf, die dazu eingerichtet ist, einen Betriebszustand des Akkupacks und/oder des Elektrogeräts zu überwachen und abhängig von der Überwachung, insbesondere von einem Ergebnis der Überwachung, wenigstens eine Maßnahme zur Verhinderung eines vorgegebenen unzulässigen Betriebszustands des Akkupacks beziehungsweise des Elektrogeräts einzuleiten.

Dass das Elektrogerät und das Akkupack hinsichtlich einer mechanischen Verbindung inkompatibel sind, kann beispielsweise derart verstanden werden, dass mechanische Schnittstellen des Elektrogeräts und des Akkupacks inkompatibel zueinander sind, das Akkupack also nicht ohne den Adapter direkt an dem Elektrogerät befestigt werden kann. Dass das Elektrogerät und das Akkupack elektrisch zueinander inkompatibel sind, kann insbesondere derart verstanden werden, dass erforderliche elektrische Anschlüsse oder elektrische Signale, die zum Betrieb des Elektrogeräts beziehungsweise zum Laden des Akkupacks erforderlich sind, auf der jeweils anderen Seite nicht oder nicht in der erforderlichen Weise vorhanden sind oder dass inkompatible Parameter oder Spannungsbereiche oder Strombereiche und so weiter vorgesehen sind. Dass das Elektrogerät und das Akkupack hinsichtlich einer Funktionalität nicht miteinander kompatibel sind, kann insbesondere derart verstanden werden, dass eine betriebsrelevante, sicherheitsrelevante oder sonstige Funktion beim Betrieb des Elektrogeräts oder beim Laden des Akkupacks weder durch das Elektrogerät noch durch das Akkupack realisiert ist. Beispielsweise kann dies ein Kommunikationsprotokoll zum Datenaustausch zwischen Elektrogerät und Akkupack betreffen. Die Inkompatibilität kann hier auf Softwareebene und/oder auf technischer Ebene beziehungsweise Hardwareebene vorliegen. Insbesondere sind wenigstens ein Teil eines Batteriemanagementsystems, wenigstens ein Teil eines Gerätemanagementsystems und/oder wenigstens ein Teil eines Ladegerätemanagementsystems weder durch das Elektrogerät noch durch das Akkupack realisiert.

Mit anderen Worten, wenn das Elektrogerät als elektrischer Verbraucher ausgestaltet ist, kann das Elektrogerät mit dem Akkupack nicht oder nur eingeschränkt betrieben werden. Ist das Elektrogerät als Ladegerät ausgestaltet, so kann das Akkupack mit dem Ladegerät ohne den Adapter nicht oder nur eingeschränkt geladen werden. Ferner kann sowohl bei elektrischen Verbrauchern als auch bei Ladegeräten als Elektrogerät ein sicherheitskritischer Zustand entstehen.

Die entsprechende Inkompatibilität, mechanisch, elektrisch und/oder funktional, wird durch die Zwischenschaltung des Adapters zwischen das Akkupack und das Elektrogerät überwunden.

Bei der Geräteschnittstelle und der Akkuschnittstelle handelt es sich insbesondere um Maschinenschnittstellen oder Hardwareschnittstellen. Darüber hinaus können jedoch auch zusätzlich entsprechende Datenschnittstellen oder Softwareschnittstellen vorgesehen sein, insbesondere zu Kommunikationszwecken.

Die Steuereinrichtung kann beispielsweise eine oder mehrere Steuereinheiten, insbesondere CPUs oder Mikrokontroller, FPGAs, Schaltungsträger, diskrete elektronische Schaltkreise, Sensoren, Zeitglieder und so weiter beinhalten.

Der Betriebszustand des Akkupacks und/oder Elektrogeräts kann beispielsweise als Gesamtheit eines oder mehrerer Werte für entsprechende Betriebsparameter oder sonstiger Parameter verstanden werden. Diese können beispielsweise eine Stromstärke des Entladestroms beziehungsweise des Ladestroms, verschiedene Temperaturen, Spannungen an elektrischen Anschlüssen, Betriebsdauern oder Verläufe von Strom, Spannung oder Temperatur beinhalten. Die Temperatur kann beispielsweise einer Umgebungstemperatur oder einer Innentemperatur des Elektrogeräts oder Akkupacks entsprechen oder einer Temperatur einer elektronischen Komponente, beispielsweise einer Schaltkomponente, des Akkupacks, des Elektrogeräts oder des Adapters. Dabei können die entsprechenden Sensoren zur Messung der Parameterwerte und dementsprechend zur Überwachung des Betriebszustands durch die Steuereinrichtung des Adapters in dem Elektrogerät, in dem Akkupack und/oder in dem Adapter vorgesehen sein. Falls die entsprechenden Sensoren zum Teil oder vollständig in dem Elektrogerät oder dem Akkupack vorgesehen sind, so verfügt der Adapter über entsprechende Hardware- und Softwareausstattung, um die entsprechenden Sensorsignale oder davon abgeleitete Informationen von dem Elektrogerät und/oder dem Akkupack zu erhalten.

Der unzulässige Betriebszustand beinhaltet dementsprechend eine unzulässige Kombination der relevanten Parameter beziehungsweise ein Überschreiten vorgegebener Grenzverläufe und dergleichen.

In einem einfachen Fall kann der Betriebszustand beispielsweise durch die Stromstärke des elektrischen Entladestroms oder Ladestroms gegeben sein und ein unzulässiger Betriebszustand kann beispielsweise dem Überschreiten eines entsprechenden Grenzwerts für den Ladestrom oder Entladestrom entsprechen.

Die Maßnahme zur Verhinderung des unzulässigen Betriebszustands kann beliebige Maßnahmen beinhalten, die dazu geeignet sind, die entsprechenden relevanten Parameter derart zu beeinflussen, dass der unzulässige Betriebszustand nicht oder mit hoher Wahrscheinlichkeit nicht eintritt. Dies kann beispielsweise durch Reduktion des entsprechenden Ladestroms oder Entladestroms oder durch vollständige Unterbrechung des Ladestroms oder Entladestroms oder durch Aktivierung einer Kühleinrichtung des Akkupacks oder Elektrogeräts oder durch Aktivierung einer Heizeinrichtung des Akkupacks und so weiter erfolgen. Die entsprechenden Aktuatoren können dabei im Adapter oder im Elektrogerät beziehungsweise im Akkupack vorgesehen sein.

So wird es ermöglicht, dass der Adapter sämtliche mechanischen, elektrischen und/oder funktionalen Inkompatibilitäten zwischen dem Akkupack und dem Elektrogerät überwindet. Insbesondere kann durch Verwendung des Adapters das Elektrogerät mittels des Akkupacks bestimmungsgemäß und ohne funktionale Einschränkungen betrieben werden beziehungsweise das Akkupack kann über den Adapter mittels des Elektrogeräts als Ladegerät bestimmungsgemäß und ohne funktionale Einschränkungen geladen werden.

Insbesondere kann die Steuereinrichtung des Adapters die Funktionalität eines Batteriemanagementsystems, eines Gerätemanagementsystems für einen elektrischen Verbraucher und/oder eines Ladegerätmanagementsystems für ein Ladegerät wenigstens teilweise übernehmen. Dadurch wird die Flexibilität bei der Kombination unterschiedlicher an sich inkompatibler Akkupacks und Elektrogeräte entscheidend erhöht, was sowohl aus Sicht der Benutzerfreundlichkeit beziehungsweise des Benutzerkomforts, als auch aus Kostensicht und nicht zuletzt aus ökologischer Sicht vorteilhaft ist.

Gemäß zumindest einer Ausführungsform des Adapters weist die Steuereinrichtung eine Steuereinheit auf, die dazu eingerichtet ist, den Betriebszustand abhängig von wenigstens einem Sensorsignal zu überwachen.

Dabei kann die Steuereinheit das wenigstens eine Sensorsignal beispielsweise von dem Elektrogerät und/oder von dem Akkupack erhalten. Alternativ oder zusätzlich kann die Steuereinrichtung des Adapters wenigstens einen Sensor aufweisen, der dazu eingerichtet ist, abhängig von wenigstens einer den Betriebszustand betreffenden Messgröße wenigstens ein Sensorsignal zu erzeugen.

Der wenigstens eine Sensor kann insbesondere wenigstens einen Stromsensor, wenigstens einen Spannungssensor und/oder wenigstens einen Temperatursensor beinhalten.

Solche Ausführungsformen sind besonders vorteilhaft, wenn weder das Elektrogerät noch das Akkupack über entsprechend erforderliche Sensoren verfügt, um den Betriebszustand überwachen zu können. Auch solche Kombinationen von Elektrogerät und Akkupack werden durch den Adapter dann möglich.

Gemäß zumindest einer Ausführungsform weist der wenigstens eine Sensor wenigstens einen Stromsensor zur Messung einer Stromstärke des Entladestroms auf. Alternativ oder zusätzlich kann der wenigstens eine Sensor wenigstens einen Stromsensor zur Messung einer Stromstärke des Ladestroms aufweisen.

Gemäß zumindest einer Ausführungsform weist der wenigstens eine Sensor einen Spannungssensor zur Messung einer Ausgangsspannung des Akkupacks, insbesondere an der Akkuschnittstelle, auf.

Ist das Elektrogerät als elektrischer Verbraucher ausgestaltet, so kann dadurch beispielsweise eine Tiefenentladung des Akkupacks verhindert werden. Ist das Elektrogerät als Ladegerät ausgestaltet, so kann verhindert werden, dass ein maximaler Ladezustand des Akkupacks überschritten wird.

Gemäß zumindest einer Ausführungsform weist der wenigstens eine Sensor wenigstens einen weiteren Spannungssensor zur Messung einer Ausgangsspannung des Elektrogeräts auf, insbesondere an der Geräteschnittstelle.

Ist das Elektrogerät als Ladegerät ausgestaltet, so kann die Steuereinrichtung daher entsprechende Funktionalitäten eines Ladegerätemanagementsystems implementieren.

Gemäß zumindest einer Ausführungsform weist der wenigstens eine Sensor wenigstens einen Temperatursensor zur Messung einer Temperatur des Adapters und/oder einer Umgebungstemperatur des Adapters auf.

Die Temperatur des Adapters kann beispielsweise einer Temperatur in einer Umgebung oder unmittelbaren Umgebung eines elektronischen Bauteils des Adapters, beispielsweise eines Schaltelements wie etwa eines Feldeffekttransistors, entsprechen.

So lässt sich zum einen eine Überhitzung des Adapters selbst vermeiden, als auch eine Überlastung des Akkupacks und/oder des Elektrogeräts. Ferner können verschiedene Parameter entsprechend unzulässiger Betriebszustände auch temperaturabhängig festgelegt sein. So kann beispielsweise eine minimale Ausgangsspannung des Akkupacks bei geringeren Umgebungstemperaturen akzeptabler sein als bei höheren Umgebungstemperaturen oder dergleichen. Auch können beispielsweise maximale Ladeströme und/oder Entladeströme bei höheren Umgebungstemperaturen gegebenenfalls niedriger sein als bei niedrigen Umgebungstemperaturen und so weiter.

Gemäß zumindest einer Ausführungsform ist der unzulässige Betriebszustand charakterisiert durch eine Stromstärke des Ladestroms, die größer ist als eine vorgegebene erste Grenzladestromstärke, insbesondere deren Betrag größer ist als die erste Grenzladestromstärke.

Mit anderen Worten ist der unzulässige Betriebszustand erreicht, wenn der Betrag der Stromstärke des Ladestroms die erste Grenzladestromstärke übersteigt.

Gemäß zumindest einer Ausführungsform ist der unzulässige Betriebszustand charakterisiert durch eine Stromstärke des Ladestroms, die während eines Zeitintervalls dauerhaft größer ist als eine vorgegebene zweite Grenzladestromstärke, wobei die Dauer des Zeitintervalls größer ist als eine vorgegebene Grenzdauer.

Mit anderen Worten ist der unzulässige Betriebszustand erreicht, wenn der Betrag der Stromstärke des Ladestroms länger als die vorgegebene Grenzdauer größer ist als die zweite Grenzladestromstärke.

Beispielsweise kann der unzulässige Betriebszustand durch das Überschreiten der ersten Grenzladestromstärke sowie durch das dauerhafte Überschreiten der zweiten Grenzladestromstärke wie beschrieben charakterisiert sein. Die zweite Grenzladestromstärke ist dann beispielsweise kleiner als die erste Grenzladestromstärke. Mit anderen Worten ist der unzulässige Betriebszustand dann erreicht, wenn die Stromstärke betragsmäßig für eine Dauer größer der Grenzdauer die zweite Grenzladestromstärke übersteigt oder wenn die Stromstärke betragsmäßig die erste Grenzladestromstärke übersteigt.

Gemäß zumindest einer Ausführungsform ist der unzulässige Betriebszustand charakterisiert durch eine Temperatur einer elektronischen Komponente der Steuereinrichtung, die größer ist als eine vorgegebene Grenztemperatur.

Die elektronische Komponente kann beispielsweise ein Schaltelement, beispielsweise einen Transistor, insbesondere einen Feldeffekttransistor, der Steuereinrichtung beinhalten. Das Schaltelement kann beispielsweise zum Unterbrechen des Ladestroms und/oder des Entladestroms eingerichtet und angeordnet sein.

Gemäß zumindest einer Ausführungsform ist der unzulässige Betriebszustand charakterisiert durch einen Betrag einer Ausgangsspannung des Akkupacks, der kleiner ist als eine vorgegebene Grenzspannung, insbesondere wenn das Elektrogerät als elektrischer Verbraucher ausgestaltet ist.

Gemäß zumindest einer Ausführungsform ist der unzulässige Betriebszustand charakterisiert durch einen Betrag der Ausgangsspannung des Akkupacks, der größer ist als eine vorgegebene zweite Grenzspannung.

Ein solcher unzulässiger Betriebszustand kann sowohl bei einem elektrischen Verbraucher als auch bei einem Ladegerät als Elektrogerät relevant sein.

Die verschiedenen beschriebenen Bedingungen für Stromstärken, Temperaturen und/oder Ausgangsspannungen können auch in Kombination den unzulässigen Betriebszustand charakterisieren.

Gemäß zumindest einer Ausführungsform beinhaltet die Maßnahme zur Verhinderung des unzulässigen Betriebszustands eine Unterbrechung des Entladestroms oder des Ladestroms.

Insbesondere kann der Adapter wenigstens ein Schaltelement, insbesondere wenigstens einen Transistor, beispielsweise wenigstens einen Feldeffekttransistor, zur Unterbrechung des Ladestroms oder des Entladestroms zur Einleitung der Maßnahme aufweisen. Alternativ kann die Steuereinheit dazu eingerichtet sein, das Elektrogerät und/oder das Akkupack anzusteuern, um den Entladestrom oder den Ladestrom zu unterbrechen.

Der Adapter, beispielsweise die Steuereinrichtung, weist eine Gerätekommunikationsschnittstelle auf, die dazu eingerichtet ist, von dem Elektrogerät eine erste Information betreffend den Betriebszustand zu erhalten und die erhaltene erste Information gemäß einer vorgegebenen ersten Vorschrift zu adaptieren. Die Steuereinrichtung, insbesondere die Steuereinheit, ist dazu eingerichtet, den Betriebszustand abhängig von der adaptierten ersten Information zu überwachen.

Die Gerätekommunikationsschnittstelle kann je nach Ausführungsform des Adapters eine Datenschnittstelle oder Softwareschnittstelle beinhalten und/oder eine Hardwareschnittstelle. Mittels der Gerätekommunikationsschnittstelle kann der Adapter, insbesondere die Steuereinrichtung, die erste Information interpretieren beziehungsweise transkribieren oder gewissermaßen "übersetzen", sodass die Steuereinrichtung oder das Akkupack die erste Information verarbeiten kann. Das Adaptieren der ersten Information gemäß der ersten Vorschrift kann beispielsweise anhand einer Look-up-Tabelle oder eines Interpretationsalgorithmus, der beispielsweise softwaretechnisch implementiert ist, erfolgen. In manchen Ausführungsformen kann die Adaption der ersten Information beispielsweise auch anhand eines elektronischen Schaltkreises durch entsprechende Adaption elektrischer Signale erfolgen. Die erste Information kann beispielsweise als digitale Information oder in Form eines analogen Spannungs- oder Stromsignals vorliegen.

Alternativ oder zusätzlich zur Gerätekommunikationsschnittstelle weist der Adapter, beispielsweise die Steuereinrichtung, eine oder die Gerätekommunikationsschnittstelle auf, die dazu eingerichtet ist, von der Steuereinrichtung eine zweite Information betreffend die Maßnahme zu erhalten und die erhaltene zweite Information gemäß einer vorgegebenen zweiten Vorschrift zu adaptieren. Die adaptierte zweite Information kann von der Gerätekommunikationsschnittstelle zur Einleitung der Maßnahme an das Elektrogerät übermittelt werden.

Wie bereits bezüglich der ersten Information beschrieben, kann die Gerätekommunikationsschnittstelle die zweite Information, die ebenfalls in Form einer digitalen Information oder eines analogen Spannungs- oder Stromsignals vorliegen kann, interpretieren beziehungsweise übersetzen, um diese für das Elektrogerät verarbeitbar zu machen.

Alternativ oder zusätzlich zur Gerätekommunikationsschnittstelle weist der Adapter, insbesondere die Steuereinrichtung, eine Akkukommunikationsschnittstelle auf, die dazu eingerichtet ist, von dem Akkupack eine dritte Information betreffend den Betriebszustand zu erhalten und die erhaltene dritte Information gemäß einer vorgegebenen dritten Vorschrift zu adaptieren. Die Steuereinrichtung ist dazu eingerichtet, insbesondere die Steuereinheit ist dazu eingerichtet, den Betriebszustand abhängig von der adaptierten dritten Information zu überwachen.

Die Akkukommunikationsschnittstelle kann dabei ebenfalls je nach Ausführungsform des Adapters eine Datenschnittstelle oder Softwareschnittstelle beinhalten und/oder eine Hardwareschnittstelle. Die Ausführungen bezüglich der Gerätekommunikationsschnittstelle gelten analog für die Akkukommunikationsschnittstelle.

Alternativ oder zusätzlich zur Akkukommunikationsschnittstelle weist der Adapter, beispielsweise die Steuereinrichtung, eine oder die Akkukommunikationsschnittstelle auf, die dazu eingerichtet ist, von der Steuereinrichtung eine vierte Information betreffend die Maßnahme zu erhalten und die erhaltene vierte Information gemäß einer vorgegebenen vierten Vorschrift zu adaptieren und die adaptierte vierte Information zur Einleitung der Maßnahme an das Akkupack zu übermitteln.

Gemäß zumindest einer Ausführungsform weist der Adapter, insbesondere die Steuereinrichtung, eine Schaltvorrichtung auf, die dazu eingerichtet und angeordnet ist, insbesondere angesteuert durch die Steuereinheit, den Entladestrom und/oder den Ladestrom zu unterbrechen und/oder eine Unterbrechung des Entladestroms und/oder des Ladestroms aufzuheben. Die Unterbrechung des Ladestroms und/oder des Entladestroms kann beispielsweise Teil der Maßnahme zur Verhinderung des unzulässigen Betriebszustands sein.

Beispielsweise kann die Schaltvorrichtung für jede Stromrichtung wenigstens ein Schaltelement, beispielsweise einen Transistor, insbesondere einen Feldeffekttransistor, aufweisen. Mit anderen Worten sind für die Unterbrechung des Entladestroms und des Ladestroms gegebenenfalls verschiedene Schaltelemente vorgesehen.

Gemäß zumindest einer Ausführungsform ist der Adapter zur Verbindung des Akkupacks mit einem elektrischen Verbraucher als Elektrogerät ausgebildet und/oder der Adapter ist zur Verbindung des Akkupacks mit einem Ladegerät zum Laden des Akkupacks als Elektrogerät ausgebildet.

Gemäß dem verbesserten Konzept wird auch eine Akkupackanordnung angegeben, die ein Akkupack mit einer weiteren Akkuschnittstelle aufweist. Die Akkupackanordnung weist einen Adapter gemäß dem verbesserten Konzept auf, wobei der Adapter über die Akkuschnittstelle des Adapters und die weitere Akkuschnittstelle des Akkupacks mechanisch und elektrisch mit dem Akkupack verbindbar oder verbunden ist.

Ein von dem Elektrogerät verschiedenes weiteres Elektrogerät kann mit dem Akkupack beispielsweise elektrisch, mechanisch und funktional kompatibel sein und über die weitere Akkuschnittstelle mechanisch und elektrisch mit dem weiteren Elektrogerät verbindbar sein. Durch den Adapter wird die Akkupackanordnung auch für das Elektrogerät kompatibel.

Gemäß dem verbesserten Konzept wird auch eine Elektrogeräteanordnung angegeben, die ein Elektrogerät mit einer weiteren Geräteschnittstelle enthält. Die Elektrogeräteanordnung weist einen Adapter gemäß dem verbesserten Konzept auf, wobei der Adapter über die Geräteschnittstelle des Adapters und die weitere Geräteschnittstelle des Elektrogeräts mechanisch und elektrisch mit dem Elektrogerät verbindbar ist.

Ein von dem Akkupack verschiedenes weiteres Akkupack kann mit dem Elektrogerät beispielsweise elektrisch, mechanisch und funktional kompatibel sein und über die weitere Geräteschnittstelle mechanisch und elektrisch mit dem weiteren Akkupack verbindbar sein. Durch den Adapter wird die Elektrogeräteanordnung auch für das Akkupack kompatibel.

Gemäß zumindest einer Ausführungsform weist die Elektrogeräteanordnung das Akkupack mit der weiteren Akkuschnittstelle auf. Der Adapter ist über die Akkuschnittstelle des Adapters und die weitere Akkuschnittstelle des Akkupacks mit dem Akkupack verbunden oder verbindbar.

Gemäß dem verbesserten Konzept wird auch ein Verfahren zur elektrischen Energieversorgung eines Elektrogeräts, das insbesondere als elektrischer Verbraucher ausgestaltet ist, mittels eines Akkupacks angegeben, wobei das Elektrogerät und das Akkupack hinsichtlich einer mechanischen und/oder elektrischen Verbindung und/oder hinsichtlich einer Funktionalität inkompatibel sind. Dazu wird das Elektrogerät über einen Adapter mechanisch und elektrisch mit dem Akkupack verbunden. Zur elektrischen Energieversorgung des Elektrogeräts wird ein Entladestrom erzeugt, der von dem Akkupack über den Adapter zu dem Elektrogerät fließt. Mittels des Adapters wird ein Betriebszustand des Akkupacks und/oder des Elektrogeräts überwacht und mittels des Adapters wird abhängig von der Überwachung wenigstens eine Maßnahme zur Verhinderung eines vorgegebenen unzulässigen Betriebszustands des Akkupacks und/oder des Elektrogeräts eingeleitet. Mittels einer Gerätekommunikationsschnittstelle des Adapters, wird von dem Elektrogerät eine erste Information betreffend den Betriebszustand erhalten und die erhaltene erste Information wird gemäß einer vorgegebenen ersten Vorschrift adaptiert und mittels einer Steuereinrichtung des Adapters wird der Betriebszustand abhängig von der adaptierten ersten Information überwacht wird. Alternativ oder zusätzlich wird mittels einer Akkukommunikationsschnittstelle des Adapters von dem Akkupack eine dritte Information betreffend den Betriebszustand erhalten und die erhaltene dritte Information wird gemäß einer vorgegebenen dritten Vorschrift adaptiert, wobei mittels der Steuereinrichtung des Adapters der Betriebszustand abhängig von der adaptierten dritten Information überwacht wird. Alternativ oder zusätzlich wird mittels der Gerätekommunikationsschnittstelle von der Steuereinrichtung eine zweite Information betreffend die Maßnahme erhalten und die erhaltene zweite Information gemäß einer vorgegebenen zweiten Vorschrift adaptiert und die adaptierte zweite Information wird zur Einleitung der Maßnahme an das Elektrogerät übermittelt.

Alternativ oder zusätzlich wird mittels der Akkukommunikationsschnittstelle von der Steuereinrichtung eine vierte Information betreffend die Maßnahme erhalten und die erhaltene vierte Information wird gemäß einer vorgegebenen vierten Vorschrift adaptiert und die adaptierte vierte Information wird zur Einleitung der Maßnahme an das Akkupack übermittelt.

Gemäß dem verbesserten Konzept wird auch ein Verfahren zum Laden eines Akkupacks mittels eines Ladegeräts angegeben, wobei das Ladegerät und das Akkupack hinsichtlich einer mechanischen und/oder elektrischen Verbindung und/oder hinsichtlich einer Funktionalität inkompatibel sind. Dazu wird das Ladegerät über einen Adapter mechanisch und elektrisch mit dem Akkupack verbunden. Zum Laden des Akkupacks wird ein Ladestrom erzeugt, der von dem Ladegerät über den Adapter zu dem Akkupack fließt. Mittels des Adapters wird ein Betriebszustand des Akkupacks und/oder des Ladegeräts überwacht und mittels des Adapters wird abhängig von der Überwachung wenigstens eine Maßnahme zur Verhinderung eines vorgegebenen unzulässigen Betriebszustands des Akkupacks und/oder des Ladegeräts eingeleitet. Mittels einer Gerätekommunikationsschnittstelle des Adapters, wird von dem Elektrogerät eine erste Information betreffend den Betriebszustand erhalten und die erhaltene erste Information wird gemäß einer vorgegebenen ersten Vorschrift adaptiert und mittels einer Steuereinrichtung des Adapters wird der Betriebszustand abhängig von der adaptierten ersten Information überwacht wird. Alternativ oder zusätzlich wird mittels einer Akkukommunikationsschnittstelle des Adapters von dem Akkupack eine dritte Information betreffend den Betriebszustand erhalten und die erhaltene dritte Information wird gemäß einer vorgegebenen dritten Vorschrift adaptiert, wobei mittels der Steuereinrichtung des Adapters der Betriebszustand abhängig von der adaptierten dritten Information überwacht wird. Alternativ oder zusätzlich wird mittels der Gerätekommunikationsschnittstelle von der Steuereinrichtung eine zweite Information betreffend die Maßnahme erhalten und die erhaltene zweite Information gemäß einer vorgegebenen zweiten Vorschrift adaptiert, und die adaptierte zweite Information wird zur Einleitung der Maßnahme an das Elektrogerät übermittelt.

Alternativ oder zusätzlich wird mittels der Akkukommunikationsschnittstelle von der Steuereinrichtung eine vierte Information betreffend die Maßnahme erhalten und die erhaltene vierte Information wird gemäß einer vorgegebenen vierten Vorschrift adaptiert und die adaptierte vierte Information wird zur Einleitung der Maßnahme an das Akkupack übermittelt.

Weitere Ausführungsformen des Verfahrens zur elektrischen Energieversorgung eines Elektrogeräts sowie des Verfahrens zum Laden eines Akkupacks nach dem verbesserten Konzept folgen direkt aus den verschiedenen Ausführungsformen des Adapters nach dem verbesserten Konzept, der Akkupackanordnung nach dem verbesserten Konzept und der Elektrogeräteanordnung nach dem verbesserten Konzept und jeweils umgekehrt. Insbesondere kann ein Adapter, der mit dem Elektrogerät und dem Akkupack verbunden ist, ein Verfahren nach dem verbesserten Konzept ausführen.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind auch Ausführungen und Merkmalskombinationen als offenbart anzusehen, die nicht alle Merkmale eines ursprünglich formulierten unabhängigen Anspruchs aufweisen und/oder die über die in den Rückbezügen der Ansprüche dargelegten Merkmalskombinationen hinausgehen oder von denen abweichen.

Die Erfindung wird im Folgenden anhand konkreter Ausführungsbeispiele und einer zugehörigen schematischen Zeichnung näher erläutert. Dabei zeigt:
- Fig.: eine schematische Darstellung einer beispielhaften Ausführungsform eines Adapters nach dem verbesserten Konzept.

In der Fig. ist schematisch eine beispielhafte Ausführungsform eines Adapters 1 zur Verbindung eines Akkupacks 2 mit einem Elektrogerät, das als elektrischer Verbraucher 3a oder als Ladegerät 3b ausgestaltet sein kann, dargestellt. Der elektrische Verbraucher 3a ist vorliegend als Elektrowerkzeug, insbesondere als akkubetreibbare Stichsäge, dargestellt. Dies stellt jedoch keine Einschränkung des verbesserten Konzepts dar. Insbesondere können auch andere elektrische Verbraucher, wie beispielsweise elektrische Haushaltsgeräte oder elektrisch antreibbare Fahrzeuge, ein Elektrogerät beziehungsweise ein elektrischer Verbraucher 3b im Sinne der vorliegenden Offenbarung sein.

Der Adapter 1 weist eine Geräteschnittstelle 4 zur mechanischen und elektrischen Verbindung des Adapters 1 mit dem elektrischen Verbraucher 3a beziehungsweise mit dem Ladegerät 3b. Der Adapter 1 weist außerdem eine Akkuschnittstelle 5 zur mechanischen und elektrischen Verbindung des Adapters 1 mit dem Akkupack 2 auf, die beispielsweise an einer der Geräteschnittstelle 4 gegenüberliegenden Seite des Adapters 1 angeordnet sein kann. Dementsprechend weist der Verbraucher 3a eine weitere Geräteschnittstelle 9a zur elektrischen und mechanischen Verbindung mit der Geräteschnittstelle 4 auf, ebenso wie das Ladegerät 3b eine weitere Geräteschnittstelle 9b zur Verbindung mit der Geräteschnittstelle 4 des Adapters 1 aufweist. Außerdem weist auch das Akkupack 2 eine weitere Akkuschnittstelle 9c zur Verbindung mit der Akkuschnittstelle 5 des Adapters 1 auf.

Ist der Verbraucher 3a über den Adapter 1 mit dem Akkupack 2 verbunden, so kann ein elektrischer Entladestrom von dem Akkupack 2 über den Adapter 1 an den Verbraucher 3a übertragen werden, sodass dieser mit elektrischer Energie von dem Akkupack 2 versorgt werden kann. Ist das Ladegerät 3b über den Adapter 1 mit dem Akkupack 2 verbunden, so kann mittels des Ladegeräts ein Ladestrom über den Adapter 1 an das Akkupack 2 übertragen werden, um das Akkupack 2 entsprechend zu laden.

Die Geräteschnittstellen 9a, 9b des Verbrauchers 3a beziehungsweise des Ladegeräts 3b sind insbesondere originär inkompatibel zu der Akkuschnittstelle 9c des Akkupacks 2. Nur durch die Verwendung des Adapters 1 ist dementsprechend ein Laden des Akkupacks 2 mittels des Ladegeräts 3b beziehungsweise eine Energieversorgung des Verbrauchers 3a mittels des Akkupacks 2 möglich.

Der Adapter 1 weist eine Steuereinheit 6 auf, die eines oder mehrere Sensorsignale erhalten kann, um einen Betriebszustand des Verbrauchers 3a beziehungsweise des Ladegeräts 3b und/oder des Akkupacks 2 zu überwachen. Dazu kann der Adapter 1 in verschiedenen Ausgestaltungsformen beispielsweise wenigstens einen Sensor 7 aufweisen, der die Sensorsignale entsprechend erzeugt und an die Steuereinheit 6 überträgt. Alternativ oder zusätzlich kann die Steuereinheit 6 auch eines oder mehrere Sensorsignale über die entsprechenden Geräteschnittstellen 4, 9a, 9b von dem Verbraucher 3a oder dem Ladegerät 3b erhalten und/oder über die entsprechenden Akkuschnittstellen 5, 9c von dem Akkupack 2.

Dazu verfügt der Adapter, beispielsweise die Steuereinheit 6, über entsprechende Kommunikationsschnittstellen 8a, 8b, 8c. Eine erste Kommunikations-schnittstelle 8a kann beispielsweise zur Kommunikation der Steuereinheit 6 mit dem Verbraucher 3a, insbesondere einer weiteren Steuereinheit (nicht gezeigt) des Verbrauchers 3a, eingerichtet sein. Eine zweite Kommunikationsschnittstelle 8b kann zur Kommunikation der Steuereinheit 6 mit dem Ladegerät 3b, insbesondere einer weiteren Steuereinheit (nicht gezeigt) des Ladegeräts 3b, eingerichtet sein. Eine dritte Kommunikationsschnittstelle 8c kann zur Kommunikation der Steuereinheit 6 mit dem Akkupack 2, insbesondere einer weiteren Steuereinheit (nicht gezeigt) des Akkupacks 2, eingerichtet sein.

Die Sensorsignale können beispielsweise eine Stromstärke des Entladestroms oder des Ladestroms betreffen. Dementsprechend kann der wenigstens eine Sensor 7 einen oder mehrere Stromsensoren beinhalten. Alternativ können entsprechende Stromsensoren in den Elektrogeräten 3a, 3b und/oder dem Akkupack 2 vorgesehen sein, die ihre entsprechenden Messwerte über die Kommunikationsschnittstellen 8a, 8b, 8c an den Adapter 1 und dementsprechend die Steuereinheit 6 übermitteln können.

**In** analoger Weise können die Sensorsignale auch Ausgangsspannungen des Akkupacks 2 oder eine Temperatur des Akkupacks 2, des Ladegeräts 3b, des Verbrauchers 3a und/oder des Adapters 1 beziehungsweise einer oder mehrerer elektronischer Komponenten davon, betreffen.

Die Steuereinheit 6 ist nun in der Lage, einen Betriebszustand des Akkupacks 2 und/oder des Elektrogeräts 3a, 3b zu überwachen, insbesondere basierend auf den Sensorsignalen. Abhängig von der Überwachung, also abhängig von einem Ergebnis der Überwachung, und insbesondere abhängig von den Sensorsignalen, kann die Steuereinheit 6 eine oder mehrere Maßnahmen zur Verhinderung eines unzulässigen Betriebszustands des Elektrogeräts 3a, 3b und/oder des Akkupacks 2 einleiten.

Hierzu kann die Steuereinheit 6 beispielsweise den Entladestrom oder den Ladestrom unterbrechen, beispielsweise wenn dieser einen Grenzwert überschreitet oder für eine bestimmte Mindestdauer einen weiteren, gegebenenfalls niedrigeren, Grenzwert überschreitet. Die Steuereinheit 6 kann somit je nach Bedarf Aufgaben eines Batteriemanagementsystems, eines Ladegerätemanagementsystems und/oder eines Gerätemanagementsystems betreffend den Verbraucher 3a übernehmen. So sind prinzipiell beliebige Kombinationen aus Elektrogerät 3a, 3b und Akkupack 2 möglich.

Durch die Implementierung der Steuereinheit 6 und gegebenenfalls der Sensoren 7 kann Situationen begegnet werden, in denen beispielsweise weder das Elektrogerät 3a, 3b noch das Akkupack 2 über entsprechende Sensorik oder Steuerungsmöglichkeiten verfügt, um einen bestimmungsgemäßen oder sicheren Betrieb des Verbrauchers 3a beziehungsweise ein sicheres und bestimmungsgemäßes Laden des Akkupacks 2 zu gewährleisten.

Mittels der Kommunikationsschnittstellen 8a, 8b, 8c, die beispielsweise auf entsprechende Transkriptionsalgorithmen, Look-up-Tabellen oder dergleichen zurückgreifen können oder gegebenenfalls entsprechende elektronische Schaltkreise zur Signaltranskription oder Signalinterpretation aufweisen kann, kann die Kommunikation von Elektrogerät 3a, 3b zu Adapter 1 und umgekehrt ebenso wie die Kommunikation von Akkupack 2 und Adapter 1 und umgekehrt interpretiert oder transkribiert werden. Dazu können die jeweils verwendete Syntax, die jeweils verwendete Spracharchitektur, ein entsprechender Befehlssatz oder dergleichen zur Kommunikation auf dem Adapter 1 hinterlegt sein.

Wie beschrieben stellt das verbesserte Konzept eine Möglichkeit zur Verfügung, verschiedene Elektrogeräte und Akkupacks unterschiedlicher Plattformen, Hersteller und Modelle miteinander zu kombinieren und einen sicheren und zuverlässigen Betrieb zu gewährleisten.

Hierzu implementiert ein Adapter ein Batteriemanagementsystem, ein Gerätemanagementsystem für einen elektrischen Verbraucher und/oder ein Lademanagementsystem oder jeweilige Teile davon. Dadurch können die Akkuzellen des Akkupacks vor unzulässigen Betriebszuständen und Überlastung hinsichtlich der verwendeten Ströme, Spannungen und Temperaturen geschützt werden. Analog kann auch der elektrische Verbraucher, insbesondere können dessen mechanische und elektronische Komponenten sowie gegebenenfalls dessen Motor, vor einer Überbeanspruchung, vor unerwünschten elektrischen Entladungen und so weiter geschützt werden. In derselben Weise können auch Komponenten des Ladegeräts vor entsprechenden Überforderungen geschützt werden.

Der Adapter kann in verschiedenen Ausführungsformen die Sensorinformationen, die er von dem Elektrogerät oder dem Akkupack erhält, interpretieren beziehungsweise übersetzen. Alternativ oder zusätzlich kann der Adapter über eine eigene Sensorik zur Überwachung der Betriebszustände verfügen.

### BEZUGSZEICHENLISTE:

- 1: Adapter
- 2: Akkupack
- 3a: Verbraucher
- 3b: Ladegerät
- 4: Geräteschnittstelle
- 5: Akkuschnittstelle
- 6: Steuereinheit
- 7: Sensoren
- 8a, 8b, 8c: Kommunikationsschnittstellen
- 9a, 9b: Geräteschnittstellen
- 9c: Akkuschnittstelle

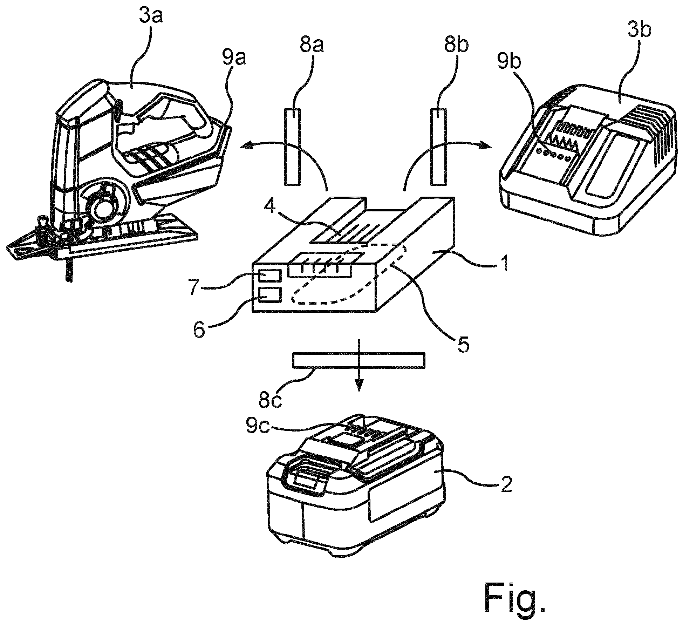

## Patentansprüche

1. Adapter (1) zur Verbindung eines Akkupacks (2) mit einem Elektrogerät (3a, 3b) zum Übertragen eines elektrischen Entladestroms von dem Akkupack (2) über den Adapter (1) zu dem Elektrogerät (3a, 3b) und/oder zum Übertragen eines elektrischen Ladestroms von dem Elektrogerät (3a, 3b) über den Adapter (1) zu dem Akkupack (2), wobei das Elektrogerät (3a, 3b) und das Akkupack (2) hinsichtlich einer mechanischen und/oder elektrischen Verbindung und/oder hinsichtlich einer Funktionalität inkompatibel sind, wobei
- der Adapter (1) eine Geräteschnittstelle (4) zur mechanischen und elektrischen Verbindung mit dem Elektrogerät (3a, 3b) aufweist, sowie eine Akkuschnittstelle (5) zur mechanischen und elektrischen Verbindung mit dem Akkupack (2);
- der Adapter (1) eine Steuereinrichtung (6, 7) aufweist, die dazu eingerichtet ist, einen Betriebszustand des Akkupacks (2) und/oder des Elektrogeräts (3a, 3b) zu überwachen und abhängig von der Überwachung wenigstens eine Maßnahme zur Verhinderung eines vorgegebenen unzulässigen Betriebszustands einzuleiten,
wobei
- der Adapter (1) eine Gerätekommunikationsschnittstelle (8a, 8b) aufweist, die dazu eingerichtet ist, von dem Elektrogerät (3a, 3b) eine erste Information betreffend den Betriebszustand zu erhalten und die erhaltene erste Information gemäß einer vorgegebenen ersten Vorschrift zu adaptieren, wobei die Steuereinrichtung (6, 7) dazu eingerichtet ist, den Betriebszustand abhängig von der adaptierten ersten Information zu überwachen; und/oder
- der Adapter (1) eine Akkukommunikationsschnittstelle (8c) aufweist, die dazu eingerichtet ist, von dem Akkupack (2) eine dritte Information betreffend den Betriebszustand zu erhalten und die erhaltene dritte Information gemäß einer vorgegebenen dritten Vorschrift zu adaptieren, wobei die Steuereinrichtung (6, 7) dazu eingerichtet ist, den Betriebszustand abhängig von der adaptierten dritten Information zu überwachen.

2. Adapter (1) zur Verbindung eines Akkupacks (2) mit einem Elektrogerät (3a, 3b) zum Übertragen eines elektrischen Entladestroms von dem Akkupack (2) über den Adapter (1) zu dem Elektrogerät (3a, 3b) und/oder zum Übertragen eines elektrischen Ladestroms von dem Elektrogerät (3a, 3b) über den Adapter (1) zu dem Akkupack (2), wobei das Elektrogerät (3a, 3b) und das Akkupack (2) hinsichtlich einer mechanischen und/oder elektrischen Verbindung und/oder hinsichtlich einer Funktionalität inkompatibel sind, wobei
- der Adapter (1) eine Geräteschnittstelle (4) zur mechanischen und elektrischen Verbindung mit dem Elektrogerät (3a, 3b) aufweist, sowie eine Akkuschnittstelle (5) zur mechanischen und elektrischen Verbindung mit dem Akkupack (2);
- der Adapter (1) eine Steuereinrichtung (6, 7) aufweist, die dazu eingerichtet ist, einen Betriebszustand des Akkupacks (2) und/oder des Elektrogeräts (3a, 3b) zu überwachen und abhängig von der Überwachung wenigstens eine Maßnahme zur Verhinderung eines vorgegebenen unzulässigen Betriebszustands einzuleiten, wobei
- der Adapter (1) eine Gerätekommunikationsschnittstelle (8a, 8b) aufweist, die dazu eingerichtet ist, von der Steuereinrichtung (6, 7) eine zweite Information betreffend die Maßnahme zu erhalten und die erhaltene zweite Information gemäß einer vorgegebenen zweiten Vorschrift zu adaptieren und die adaptierte zweite Information zur Einleitung der Maßnahme an das Elektrogerät (3a, 3b) zu übermitteln; und/oder
- der Adapter (1) eine Akkukommunikationsschnittstelle (8c) aufweist, die dazu eingerichtet ist, von der Steuereinrichtung (6, 7) eine vierte Information betreffend die Maßnahme zu erhalten und die erhaltene vierte Information gemäß einer vorgegebenen vierten Vorschrift zu adaptieren und die adaptierte vierte Information zur Einleitung der Maßnahme an das Akkupack (2) zu übermitteln.

3. Adapter (1) nach Anspruch 1 oder 2, die Steuereinrichtung (6, 7) wenigstens einen Sensor (7) aufweist, der dazu eingerichtet ist, abhängig von wenigstens einer den Betriebszustand betreffenden Messgröße wenigstens ein Sensorsignal zu erzeugen; und
- die Steuereinrichtung (6, 7) eine Steuereinheit (6) aufweist, die dazu eingerichtet ist, den Betriebszustand abhängig von dem wenigstens einen Sensorsignal zu überwachen.

4. Adapter (1) nach Anspruch 3, wobei der wenigstens eine Sensor (7)
- wenigstens einen Stromsensor zur Messung einer Stromstärke des Entladestroms und/oder des Ladestroms; und/oder
- einen Spannungssensor zur Messung einer Ausgangsspannung des Akkupacks (2) enthält; und/oder
- einen weiteren Spannungssensor zur Messung einer Ausgangsspannung des Elektrogeräts (3a, 3b) enthält; und/oder
- wenigstens einen Temperatursensor zur Messung einer Temperatur des Adapters (1) und/oder einer Umgebungstemperatur des Adapters (1) enthält.

5. Adapter (1) nach einem der vorhergehenden Ansprüche, wobei der unzulässige Betriebszustand charakterisiert ist durch
- eine Stromstärke des Ladestroms, die größer ist als eine vorgegebene erste Grenzladestromstärke; und/oder
- eine Stromstärke des Ladestroms, die während eines Zeitintervalls dauerhaft größer ist als eine vorgegebene zweite Grenzladestromstärke, wobei die Dauer des Zeitintervalls größer ist als eine vorgegebene Grenzdauer; und/oder
- eine Temperatur einer elektronischen Komponente der Steuereinrichtung (6, 7), die größer ist als eine vorgegebene Grenztemperatur.

6. Adapter (1) nach einem der vorhergehenden Ansprüche, wobei die Maßnahme eine Unterbrechung des Entladestroms oder des Ladestroms enthält.

7. Adapter (1) nach einem der vorhergehenden Ansprüche, aufweisend eine Schaltvorrichtung, die dazu eingerichtet und angeordnet ist, den Entladestrom und/oder den Ladestrom zu unterbrechen.

8. Adapter (1) nach einem der vorhergehenden Ansprüche, wobei
- der Adapter (1) zur Verbindung des Akkupacks (2) mit einem elektrischen Verbraucher (3a) als Elektrogerät (3a, 3b) ausgebildet ist; und/oder
- der Adapter (1) zur Verbindung des Akkupacks (2) mit einem Ladegerät (3b) als Elektrogerät (3a, 3b) ausgebildet ist.

9. Akkupackanordnung aufweisend
- ein Akkupack (2) mit einer weiteren Akkuschnittstelle (9c); und
- einen Adapter (1) nach einem der vorhergehenden Ansprüche, wobei der Adapter (1) über die Akkuschnittstelle (5) und die weitere Akkuschnittstelle (9c) mechanisch und elektrisch mit dem Akkupack (2) verbindbar ist.

10. Elektrogeräteanordnung aufweisend
- ein Elektrogerät (3a, 3b) mit einer weiteren Geräteschnittstelle (9a, 9b); und
- einen Adapter (1) nach einem der Ansprüche 1 bis 8, wobei der Adapter (1) über die Geräteschnittstelle (4) und die weitere Geräteschnittstelle (9a, 9b) mechanisch und elektrisch mit dem Elektrogerät (3a, 3b) verbindbar ist.

11. Verfahren zur elektrischen Energieversorgung eines Elektrogeräts (3a) mittels eines Akkupacks (2), wobei das Elektrogerät (3a) und das Akkupack (2) hinsichtlich einer mechanischen und/oder elektrischen Verbindung und/oder hinsichtlich einer Funktionalität inkompatibel sind, wobei
- das Elektrogerät (3a) über einen Adapter (1) mechanisch und elektrisch mit dem Akkupack (2) verbunden wird;
- zur elektrischen Energieversorgung des Elektrogeräts (3a) ein Entladestrom erzeugt wird, der von dem Akkupack (2) über den Adapter (1) zu dem Elektrogerät (3a) fließt;
- mittels des Adapters (1) ein Betriebszustand des Akkupacks (2) und/oder des Elektrogeräts (3a) überwacht wird; und
- mittels des Adapters (1) abhängig von der Überwachung wenigstens eine Maßnahme zur Verhinderung eines vorgegebenen unzulässigen Betriebszustands eingeleitet wird, wobei
- mittels einer Gerätekommunikationsschnittstelle (8a, 8b) des Adapters (1), von dem Elektrogerät (3a, 3b) eine erste Information betreffend den Betriebszustand erhalten wird und die erhaltene erste Information gemäß einer vorgegebenen ersten Vorschrift adaptiert wird und mittels einer Steuereinrichtung (6, 7) des Adapters (1) der Betriebszustand abhängig von der adaptierten ersten Information überwacht wird; und/oder
- mittels einer Akkukommunikationsschnittstelle (8c) des Adapters (1) von dem Akkupack (2) eine dritte Information betreffend den Betriebszustand erhalten wird und die erhaltene dritte Information gemäß einer vorgegebenen dritten Vorschrift adaptiert wird; wobei mittels der Steuereinrichtung (6, 7) des Adapters (1) der Betriebszustand abhängig von der adaptierten dritten Information überwacht wird; und/oder
- mittels der Gerätekommunikationsschnittstelle (8a) von der Steuereinrichtung (6, 7) eine zweite Information betreffend die Maßnahme erhalten wird und die erhaltene zweite Information gemäß einer vorgegebenen zweiten Vorschrift adaptiert wird; und die adaptierte zweite Information zur Einleitung der Maßnahme an das Elektrogerät (3a, 3b) übermittelt wird; und/oder
- mittels der Akkukommunikationsschnittstelle (8c) von der Steuereinrichtung (6, 7) eine vierte Information betreffend die Maßnahme erhalten wird und die erhaltene vierte Information gemäß einer vorgegebenen vierten Vorschrift adaptiert wird; und die adaptierte vierte Information zur Einleitung der Maßnahme an das Akkupack (2) übermittelt wird.

12. Verfahren zum Laden eines Akkupacks (2) mittels eines Ladegeräts (3b), wobei das Ladegerät (3b) und das Akkupack (2) hinsichtlich einer mechanischen und/oder elektrischen Verbindung und/oder hinsichtlich einer Funktionalität inkompatibel sind, wobei
- das Ladegerät (3b) über einen Adapter (1) mechanisch und elektrisch mit dem Akkupack (2) verbunden wird;
- zum Laden des Akkupacks (2) ein Ladestrom erzeugt wird, der von dem Ladegerät (3b) über den Adapter (1) zu dem Akkupack (2) fließt;
- mittels des Adapters (1) ein Betriebszustand des Akkupacks (2) und/oder des Ladegeräts (3b) überwacht wird; und
- mittels des Adapters (1) abhängig von der Überwachung wenigstens eine Maßnahme zur Verhinderung eines vorgegebenen unzulässigen Betriebszustands eingeleitet wird, wobei
- mittels einer Gerätekommunikationsschnittstelle (8a, 8b) des Adapters (1), von dem Elektrogerät (3a, 3b) eine erste Information betreffend den Betriebszustand erhalten wird und die erhaltene erste Information gemäß einer vorgegebenen ersten Vorschrift adaptiert wird und mittels einer Steuereinrichtung (6, 7) des Adapters (1) der Betriebszustand abhängig von der adaptierten ersten Information überwacht wird; und/oder
- mittels einer Akkukommunikationsschnittstelle (8c) des Adapters (1) von dem Akkupack (2) eine dritte Information betreffend den Betriebszustand erhalten wird und die erhaltene dritte Information gemäß einer vorgegebenen dritten Vorschrift adaptiert wird; wobei mittels der Steuereinrichtung (6, 7) des Adapters (1) der Betriebszustand abhängig von der adaptierten dritten Information überwacht wird; und/oder
- mittels der Gerätekommunikationsschnittstelle (8a) von der Steuereinrichtung (6, 7) eine zweite Information betreffend die Maßnahme erhalten wird und die erhaltene zweite Information gemäß einer vorgegebenen zweiten Vorschrift adaptiert wird; und die adaptierte zweite Information zur Einleitung der Maßnahme an das Elektrogerät (3a, 3b) übermittelt wird; und/oder
- mittels der Akkukommunikationsschnittstelle (8c) von der Steuereinrichtung (6, 7) eine vierte Information betreffend die Maßnahme erhalten wird und die erhaltene vierte Information gemäß einer vorgegebenen vierten Vorschrift adaptiert wird; und die adaptierte vierte Information zur Einleitung der Maßnahme an das Akkupack (2) übermittelt wird.

## Claims

1. Adapter (1) for connecting a battery pack (2) to an electrical device (3a, 3b) for transferring an electric discharge current from the battery pack (2) via the adapter (1) to the electrical device (3a, 3b) and/or for transferring an electric charging current from the electrical device (3a, 3b) via the adapter (1) to the battery pack (2), wherein the electrical device (3a, 3b) and the battery pack (2) are incompatible with respect to a mechanical and/or electrical connection and/or functionality, wherein
- the adapter (1) has a device interface (4) for mechanical and electrical connection with the electrical device (3a, 3b) and a battery interface (5) for mechanical and electrical connection with the battery pack (2);
- the adapter (1) has a control device (6, 7) configured to monitor an operating state of the battery pack (2) and/or the electrical device (3a, 3b) and, depending on the monitoring, to initiate at least one measure to prevent a specified prohibited operating state, wherein
- the adapter (1) has a device communication interface (8a, 8b) configured to receive from the electrical device (3a, 3b) a first information regarding the operating state and to adapt the received first information according to a specified first rule, wherein the control device (6, 7) is configured to monitor the operating state based on the adapted first information; and/or
- the adapter (1) has a battery communication interface (8c) configured to receive from the battery pack (2) a third information regarding the operating state and to adapt the received third information according to a specified third rule, wherein the control device (6, 7) is configured to monitor the operating state based on the adapted third information.

2. Adapter (1) for connecting a battery pack (2) to an electrical device (3a, 3b) for transferring an electric discharge current from the battery pack (2) via the adapter (1) to the electrical device (3a, 3b) and/or for transferring an electric charging current from the electrical device (3a, 3b) via the adapter (1) to the battery pack (2), wherein the electrical device (3a, 3b) and the battery pack (2) are incompatible with respect to a mechanical and/or electrical connection and/or functionality, wherein
- the adapter (1) has a device interface (4) for mechanical and electrical connection with the electrical device (3a, 3b) and a battery interface (5) for mechanical and electrical connection with the battery pack (2);
- the adapter (1) has a control device (6, 7) configured to monitor the operating state of the battery pack (2) and/or the electrical device (3a, 3b) and, depending on the monitoring, to initiate at least one measure to prevent a specified prohibited operating state, wherein
- the adapter (1) has a device communication interface (8a, 8b) configured to receive from the control device (6, 7) a second information regarding the measure and to adapt the received second information according to a specified second rule, and to transmit the adapted second information to the electrical device (3a, 3b) to initiate the measure; and/or
- the adapter (1) has a battery communication interface (8c) configured to receive from the control device (6, 7) a fourth information regarding the measure and to adapt the received fourth information according to a specified fourth rule, and to transmit the adapted fourth information to the battery pack (2) to initiate the measure.

3. Adapter (1) according to claim 1 or 2, wherein the control device (6, 7) includes at least one sensor (7) configured to generate at least one sensor signal depending on at least one operating state related measurement, and
- the control device (6, 7) includes a control unit (6) configured to monitor the operating state based on the at least one sensor signal.

4. Adapter 1 according to claim 3, wherein the at least one sensor (7)
- includes at least one current sensor for measuring the current of the discharge current and/or the charging current; and/or
- includes a voltage sensor for measuring an output voltage of the battery pack (2); and/or
- includes an additional voltage sensor for measuring an output voltage of the electrical device (3a, 3b); and/or
- includes at least one temperature sensor for measuring a temperature of the adapter (1) and/or the ambient temperature of the adapter (1).

5. Adapter (1) according to one of the preceding claims, wherein the prohibited operating state is **characterized by**
- a charging current that exceeds a specified first threshold charging current; and/or
- a charging current that, over a time interval, remains continuously higher than a specified second threshold charging current, wherein the duration of the time interval exceeds a specified threshold duration; and/or
- a temperature of an electronic component of the control device (6, 7) that exceeds a specified threshold temperature.

6. Adapter (1) according to one of the preceding claims, wherein the measure includes an interruption of the discharge current or the charging current.

7. Adapter (1) according to one of the preceding claims, including a switching device configured and arranged to interrupt the discharge current and/or the charging current.

8. Adapter (1) according to one of the preceding claims, wherein
- the adapter (1) is configured to connect the battery pack (2) with an electrical consumer (3a) as an electrical device (3a, 3b); and/or
- the adapter (1) is configured to connect the battery pack (2) with a charger (3b) as an electrical device (3a, 3b).

9. Battery-pack arrangement comprising
- a battery pack (2) with an additional battery interface (9c); and
- an adapter (1) as claimed in one of the preceding claims, wherein the adapter (1) can be mechanically and electrically connected to the battery pack (2) via the battery interface (5) and the additional battery interface (9c).

10. Electrical-device arrangement comprising
- an electrical device (3a, 3b) with an additional device interface (9a, 9b); and
- an adapter (1) according to one of the claims 1 to 8, wherein the adapter (1) can be mechanically and electrically connected to the electrical device (3a, 3b) via the device interface (4) and the additional device interface (9a, 9b).

11. Method for electrically powering an electrical device (3a) using a battery pack (2), wherein the electrical device (3a) and the battery pack (2) are incompatible with respect to a mechanical and/or electrical connection and/or functionality, wherein
- the electrical device (3a) is mechanically and electrically connected to the battery pack (2) via an adapter (1);
- an electric discharge current is generated for powering the electrical device (3a), which flows from the battery pack (2) through the adapter (1) to the electrical device (3a);
- an operating state of the battery pack (2) and/or the electrical device (3a) is monitored via the adapter (1); and
- depending on the monitoring, at least one measure to prevent a specified prohibited operating state is initiated via the adapter (1), wherein
- via a device communication interface (8a, 8b) of the adapter (1), a first information regarding the operating state is received from the electrical device (3a, 3b) and is adapted according to a specified first rule, and the operating state is monitored by the control device (6, 7) based on the adapted first information; and/or
- via a battery communication interface (8c) of the adapter (1), a third information regarding the operating state is received from the battery pack (2) and is adapted according to a specified third rule, and the operating state is monitored by the control device (6, 7) based on the adapted third information; and/or
- via the device communication interface (8a) of the control device (6, 7), a second information regarding the measure is received and adapted according to a specified second rule, and the adapted second information is transmitted to the electrical device (3a, 3b) to initiate the measure; and/or
- via the battery communication interface (8c) of the control device (6, 7), a fourth information regarding the measure is received and adapted according to a specified fourth rule, and the adapted fourth information is transmitted to the battery pack (2) to initiate the measure.

12. Method for charging a battery pack (2) using a charger (3b), wherein the charger (3b) and the battery pack (2) are incompatible with respect to a mechanical and/or electrical connection and/or functionality, wherein
- the charger (3b) is mechanically and electrically connected to the battery pack (2) via an adapter (1);
- a charging current is generated for charging the battery pack (2), which flows from the charger (3b) through the adapter (1) to the battery pack (2);
- an operating state of the battery pack (2) and/or the charger (3b) is monitored via the adapter (1); and
- depending on the monitoring, at least one measure to prevent a specified prohibited operating state is initiated via the adapter (1), wherein
- via a device communication interface (8a, 8b) of the adapter (1), a first information regarding the operating state is received from the electrical device (3a, 3b) and is adapted according to a specified first rule, and the operating state is monitored by the control device (6, 7) based on the adapted first information; and/or
- via a battery communication interface 8c of the adapter (1), a third information regarding the operating state is received from the battery pack (2) and is adapted according to a specified third rule, and the operating state is monitored by the control device (6, 7) based on the adapted third information; and/or
- via the device communication interface (8a) of the control device (6, 7), a second information regarding the measure is received and adapted according to a specified second rule, and the adapted second information is transmitted to the electrical device (3a, 3b) to initiate the measure; and/or
- via the battery communication interface (8c) of the control device (6, 7), a fourth information regarding the measure is received and adapted according to a specified fourth rule, and the adapted fourth information is transmitted to the battery pack (2) to initiate the measure.

## Revendications

1. Adaptateur (1) pour connecter un bloc-batterie (2) à un appareil électrique (3a, 3b) afin de transmettre un courant de décharge électrique du bloc-batterie (2) à l'appareil électrique (3a, 3b) via l'adaptateur (1) et/ou pour transmettre un courant de charge électrique de l'appareil électrique (3a, 3b) au bloc-batterie (2) via l'adaptateur (1), l'appareil électrique (3a, 3b) et le bloc-batterie (2) étant incompatibles en termes de connexion mécanique et/ou électrique et/ou en termes d'une fonctionnalité, dans lequel
- l'adaptateur (1) comprend une interface d'appareil (4) pour la connexion mécanique et électrique à l'appareil électrique (3a, 3b), ainsi qu'une interface de batterie (5) pour la connexion mécanique et électrique au bloc-batterie (2) ;
- l'adaptateur (1) comprend un dispositif de commande (6, 7) qui est conçu pour surveiller un état de fonctionnement du bloc-batterie (2) et/ou de l'appareil électrique (3a, 3b) et, en fonction de la surveillance, pour déclencher au moins une mesure visant à empêcher un état de fonctionnement inadmissible prédéfini,
dans lequel
- l'adaptateur (1) comprend une interface de communication d'appareil (8a, 8b) qui est conçue pour recevoir de l'appareil électrique (3a, 3b) une première information relative à l'état de fonctionnement et pour adapter la première information obtenue conformément à une première règle prédéfinie, le dispositif de commande (6, 7) étant conçu pour surveiller l'état de fonctionnement en fonction de la première information adaptée ; et/ou
- l'adaptateur (1) comprend une interface de communication de batterie (8c) qui est conçue pour recevoir de la batterie (2) une troisième information relative à l'état de fonctionnement et pour adapter la troisième information reçue conformément à une troisième règle prédéfinie, le dispositif de commande (6, 7) étant conçu pour surveiller l'état de fonctionnement en fonction de la troisième information adaptée.

2. Adaptateur (1) pour connecter un bloc-batterie (2) à un appareil électrique (3a, 3b) afin de transmettre un courant de décharge électrique du bloc-batterie (2) à l'appareil électrique (3a, 3b) via l'adaptateur (1) et/ou pour transmettre un courant de charge électrique de l'appareil électrique (3a, 3b) au bloc-batterie (2) via l'adaptateur (1), l'appareil électrique (3a, 3b) et le bloc-batterie (2) étant incompatibles en termes de connexion mécanique et/ou électrique et/ou en termes d'une fonctionnalité, dans lequel
- l'adaptateur (1) comprend une interface d'appareil (4) pour la connexion mécanique et électrique à l'appareil électrique (3a, 3b), ainsi qu'une interface de batterie (5) pour la connexion mécanique et électrique au bloc-batterie (2) ;
- l'adaptateur (1) comprend un dispositif de commande (6, 7) qui est conçu pour surveiller un état de fonctionnement du bloc-batterie (2) et/ou de l'appareil électrique (3a, 3b) et, en fonction de la surveillance, pour déclencher au moins une mesure visant à empêcher un état de fonctionnement inadmissible prédéfini, dans lequel
- l'adaptateur (1) comprend une interface de communication d'appareil (8a, 8b) qui est conçue pour recevoir du dispositif de commande (6, 7) une deuxième information relative à la mesure et pour adapter la deuxième information reçue conformément à une deuxième règle prédéfinie et pour transmettre la deuxième information adaptée à l'appareil électrique (3a, 3b) afin de déclencher la mesure ; et/ou
- l'adaptateur (1) comprend une interface de communication avec la batterie (8c) qui est conçue pour recevoir du dispositif de commande (6, 7) une quatrième information relative à la mesure et pour adapter la quatrième information reçue conformément à une quatrième règle prédéfinie et pour transmettre la quatrième information adaptée au bloc-batterie (2) afin de déclencher la mesure.

3. Adaptateur (1) selon la revendication 1 ou la revendication 2, le dispositif de commande (6, 7) comprenant au moins un capteur (7) qui est conçu pour générer au moins un signal de capteur en fonction d'au moins une grandeur de mesure relative à l'état de fonctionnement ; et
- le dispositif de commande (6, 7) comprend une unité de commande (6) qui est conçue pour surveiller l'état de fonctionnement en fonction dudit au moins un signal de capteur.

4. Adaptateur (1) selon la revendication 3, dans lequel ledit au moins un capteur (7) contient
- au moins un capteur de courant pour mesurer une intensité du courant de décharge et/ou du courant de charge ; et/ou
- un capteur de tension pour mesurer une tension de sortie du bloc-batterie (2) ; et/ou contient
- un autre capteur de tension pour mesurer une tension de sortie de l'appareil électrique (3a, 3b) ; et/ou contient
- au moins un capteur de température pour mesurer une température de l'adaptateur (1) et/ou une température ambiante de l'adaptateur (1).

5. Adaptateur (1) selon l'une des revendications précédentes, dans lequel l'état de fonctionnement inadmissible est **caractérisé par**
- une intensité du courant de charge qui est supérieure à une première intensité de courant de charge limite prédéfinie ; et/ou
- une intensité du courant de charge qui est durablement supérieure à une deuxième intensité limite de courant de charge prédéfinie pendant un intervalle de temps, la durée de l'intervalle de temps étant supérieure à une durée limite prédéfinie ; et/ou
- une température d'un composant électronique du dispositif de commande (6, 7) qui est supérieure à une température limite prédéfinie.

6. Adaptateur (1) selon l'une des revendications précédentes, dans lequel la mesure comprend une interruption du courant de décharge ou du courant de charge.

7. Adaptateur (1) selon l'une des revendications précédentes, comprenant un dispositif de commutation qui est conçu et agencé pour interrompre le courant de décharge et/ou le courant de charge.

8. Adaptateur (1) selon l'une des revendications précédentes, dans lequel
- l'adaptateur (1) est conçu pour connecter le bloc-batterie (2) à un consommateur électrique (3a) en tant qu'appareil électrique (3a, 3b) ; et/ou
- l'adaptateur (1) est conçu pour connecter le bloc-batterie (2) à un chargeur (3b) en tant qu'appareil électrique (3a, 3b).

9. Ensemble formant batterie, comprenant
- un bloc-batterie (2) avec une autre interface de batterie (9c) ; et
- un adaptateur (1) selon l'une des revendications précédentes, l'adaptateur (1) étant apte à être relié mécaniquement et électriquement au bloc-batterie (2) via l'interface de batterie (5) et ladite autre interface de batterie (9c) .

10. Ensemble formant appareil électrique, comprenant
- un appareil électrique (3a, 3b) avec une autre interface d'appareil (9a, 9b) ; et
- un adaptateur (1) selon l'une des revendications 1 à 8, l'adaptateur (1) étant apte à être relié mécaniquement et électriquement à l'appareil électrique (3a, 3b) via l'interface d'appareil (4) et ladite autre interface d'appareil (9a, 9b).

11. Procédé d'alimentation en énergie électrique d'un appareil électrique (3a) au moyen d'un bloc-batterie (2), l'appareil électrique (3a) et le bloc-batterie (2) étant incompatibles en termes de connexion mécanique et/ou électrique et/ou en termes de fonctionnalité, dans lequel
- l'appareil électrique (3a) est relié mécaniquement et électriquement au bloc-batterie (2) via un adaptateur (1) ;
- pour l'alimentation électrique de l'appareil électrique (3a), un courant de décharge est généré, lequel circule du bloc-batterie (2) vers l'appareil électrique (3a) via l'adaptateur (1) ;
- un état de fonctionnement du bloc-batterie (2) et/ou de l'appareil électrique (3a) est surveillé au moyen de l'adaptateur (1) ; et
- au moins une mesure est déclenchée au moyen de l'adaptateur (1) en fonction de la surveillance afin d'empêcher un état de fonctionnement inadmissible prédéfini,
- au moyen d'une interface de communication d'appareil (8a, 8b) de l'adaptateur (1), une première information relative à l'état de fonctionnement est obtenue à partir de l'appareil électrique (3a, 3b), et la première information obtenue est adaptée conformément à une première règle prédéfinie, et l'état de fonctionnement est surveillé au moyen d'un dispositif de commande (6, 7) de l'adaptateur (1) en fonction de la première information adaptée ; et/ou
- une troisième information relative à l'état de fonctionnement est obtenue à partir du bloc-batterie (2) au moyen d'une interface de communication de batterie (8c) de l'adaptateur (1), et la troisième information obtenue est adaptée conformément à une troisième règle prédéfinie ; l'état de fonctionnement étant surveillé au moyen du dispositif de commande (6, 7) de l'adaptateur (1) en fonction de la troisième information adaptée ; et/ou
- une deuxième information relative à la mesure est obtenue à partir du dispositif de commande (6, 7) au moyen de l'interface de communication de l'appareil (8a), et la deuxième information obtenue est adaptée conformément à une deuxième règle prédéfinie ; et la deuxième information adaptée est transmise à l'appareil électrique (3a, 3b) pour déclencher la mesure ; et/ou
- une quatrième information relative à la mesure est obtenue à partir du dispositif de commande (6, 7) au moyen de l'interface de communication de batterie (8c), et la quatrième information obtenue est adaptée conformément à une quatrième règle prédéfinie ; et la quatrième information adaptée est transmise au bloc-batterie (2) pour déclencher la mesure.

12. Procédé pour charger un bloc-batterie (2) au moyen d'un chargeur (3b), le chargeur (3b) et le bloc-batterie (2) étant incompatibles en termes de connexion mécanique et/ou électrique et/ou en termes de fonctionnalité, dans lequel
- le chargeur (3b) est relié mécaniquement et électriquement au bloc-batterie (2) via un adaptateur (1) ;
- pour charger le bloc-batterie (2), un courant de charge est généré, qui circule du chargeur (3b) vers le bloc-batterie (2) via l'adaptateur (1) ;
- un état de fonctionnement du bloc-batterie (2) et/ou du chargeur (3b) est surveillé au moyen de l'adaptateur (1) ; et
- au moins une mesure est déclenchée au moyen de l'adaptateur (1) en fonction de la surveillance afin d'empêcher un état de fonctionnement inadmissible prédéfini,
- au moyen d'une interface de communication d'appareil (8a, 8b) de l'adaptateur (1), une première information relative à l'état de fonctionnement est obtenue à partir de l'appareil électrique (3a, 3b), et la première information obtenue est adaptée conformément à une première règle prédéfinie, et l'état de fonctionnement est surveillé au moyen d'un dispositif de commande (6, 7) de l'adaptateur (1) en fonction de la première information adaptée ; et/ou
- une troisième information relative à l'état de fonctionnement est obtenue à partir du bloc-batterie (2) au moyen d'une interface de communication de batterie (8c) de l'adaptateur (1), et la troisième information obtenue est adaptée conformément à une troisième règle prédéfinie ; l'état de fonctionnement étant surveillé au moyen du dispositif de commande (6, 7) de l'adaptateur (1) en fonction de la troisième information adaptée ; et/ou
- une deuxième information relative à la mesure est obtenue à partir du dispositif de commande (6, 7) au moyen de l'interface de communication de l'appareil (8a), et la deuxième information obtenue est adaptée conformément à une deuxième règle prédéfinie ; et la deuxième information adaptée est transmise à l'appareil électrique (3a, 3b) pour déclencher la mesure ; et/ou
- une quatrième information relative à la mesure est obtenue à partir du dispositif de commande (6, 7) au moyen de l'interface de communication de batterie (8c), et la quatrième information obtenue est adaptée conformément à une quatrième règle prédéfinie ; et la quatrième information adaptée est transmise au bloc-batterie (2) pour déclencher la mesure.
